# EUROPEAN PATENT SPECIFICATION

(11) **EP 1 059 029 B1**
(45) Date of publication and mention of the grant of the patent: **28.09.2005**
(21) Application number: 00304833.7
(22) Date of filing: 07.06.2000
(51) Int. Cl.: A01K 97/12

(54) **Light indicator assembly**
Zusammenbau einer Leuchtindikator
Ensemble à indicateur lumineux

(30) Priority: 08.06.1999 GB 9913345
(43) Date of publication of application: 13.12.2000
(73) Proprietor: Fox Design International Limited, Essex CM3 8HQ (GB)
(72) Inventor: Simpson, Nigel, Ventnor, Isle of Wight PO38 3BZ (GB); Fox, Clifford Royston, Chelmsford, Essex CM3 8HQ (GB)
(74) Representative: Crouch, David John

(56) References cited:
- EP-A- 0 570 117
- DE-A- 4 340 962
- US-A- 5 321 903
- US-A- 5 327 328
- US-A- 5 738 433

## Description

The present invention relates to a fish-bite indicator provided with a light indicator assembly.

One such indicator is disclosed in EP-B-570,117, which is provided with a light-emitting diode which is connected to fish-bite detector circuitry in such a fashion as to emit light when the circuitry detects a fish-bite, the diode being provided adjacent to a translucent part of a housing of the fish-bite indicator. A disadvantage of this construction is that the light-emitting diode cannot readily be mounted on a circuit board, in such a fashion as to obtain a water-tight fitting with the housing, thus making manufacture of the indicator more difficult and more expensive.

The present invention seeks to provide a remedy.

Accordingly the present invention is directed to a fish-bite indicator provided with a light indicator assembly and comprising a water-tight housing, a printed circuit board contained within the housing, at least one light-emitter device attached to the printed circuit board, and a generally cylindrical light guide having an inner end situated in the housing interior adjacent to the light-emitter device, and an outer end situated on the outside of the housing, so that the said outer end is illuminated when the light-emitter device emits light, in which the light-emitter device is a surface mounted light emitting diode and the light guide has (a) a generally planar inner face within the interior of the housing and adjacent to the surface mounted light emitting diode and (b) an annular flange which abuts the inner surface of the housing and by which the guide is fixed to the housing in a water-tight fashion, whilst at the same time light is received by the outer end of the light guide which has been reflected off the boundary of the light guide by total internal reflection.

Advantageously, the light guide comprises a generally cylindrical solid light guide.

Alternatively, the light guide may comprise an optic fibre or other light guide which guides the light to a position outside the housing which is spaced apart from that position on the outside of the housing which is closest to the light emitter device. Still further, the light guide may be branched or it may otherwise comprise two or more guide parts to guide light to two or more respective locations on the outside of the housing.

High precision in the relative positioning between the light emitter device and the light guide is not necessary, so that the construction is relatively inexpensive to construct. Furthermore, it is easier to obtain a water-tight construction for the housing.

Preferably, the assembly constitutes a fish-bite indicator in which the light emitter device is connected to fish-bite detector circuitry in such a fashion as to emit light when the circuitry detects a fish-bite.

The light guide may comprise acrylic.

A wide angle of transmitted light from the said outer end is possible if the said end is generally convex as viewed from outside the housing. The said angle may be substantially 180° in an intended horizontal plane, and it may be a solid angle of substantially 2 steradians or more.

The use of a light emitter device in the form of a surface mounted diode allows machine assembly and avoids the need for jigging to the front casing as in a conventional construction, making it cheaper to assemble. The diode may be a dual colour or tricolour or multi-colour diode. Alternatively or in addition, there may be a plurality of diodes adjacent to the said inner end, each of which thereby illuminates the said outer end when it emits light, whereby the said outer end may be illuminated by any selected one of a plurality of colours.

An example of a fish-bite indicator made in accordance with the present invention will now be described with reference to the accompanying drawings in which:
- Figure 1: shows a front elevational view of the indicator;
- Figure 1a: shows an axial section through one of the adjustable knobs of the indicator shown in Figure 1;
- Figure 2: shows the interior of a first half of the indicator shown in Figure 1;
- Figure 2a: shows an axial section through a light-emitting diode and light guide assembly of the indicator shown in Figure 1;
- Figure 3: shows the interior of a second half of the indicator shown in Figure 1 which mates with the half shown in Figure 2; and
- Figure 4: shows a circuit diagram of electronic circuitry contained within the indicator shown in Figure 1.

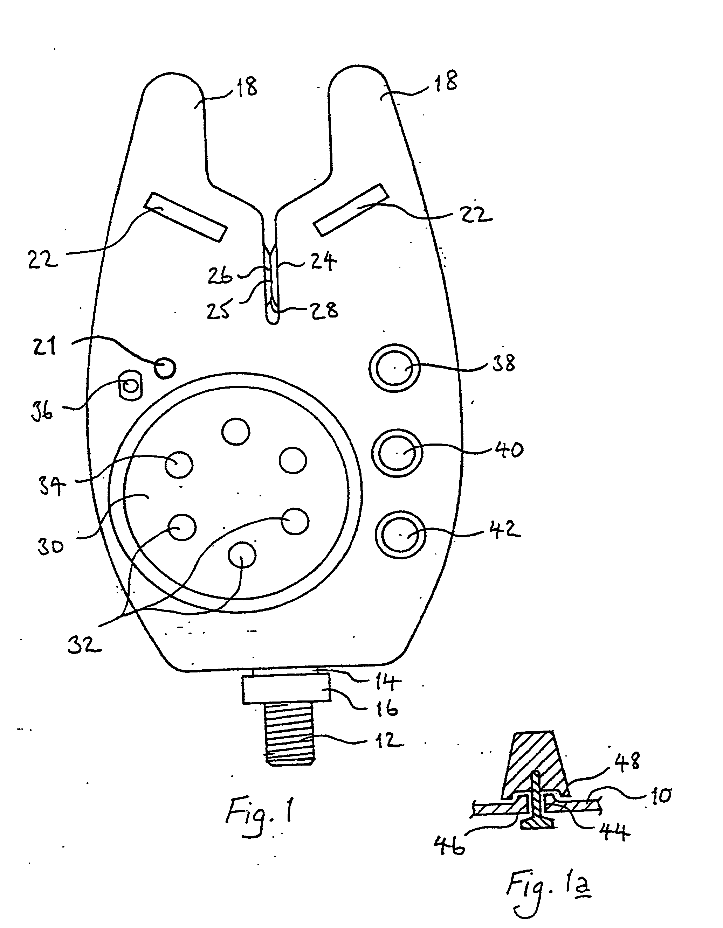

The fish-bite indicator shown in Figure 1 comprises a two-part synthetic plastics injection moulded housing 10 having an external screw-threaded metal shank 12 extending downwardly from its underside. A seal is formed between the housing 10 and the shank 12 by means of an O-ring 14 and a tightening nut 16 which urges the O-ring 14 tightly against the housing 10 and inwardly against the shank 12.

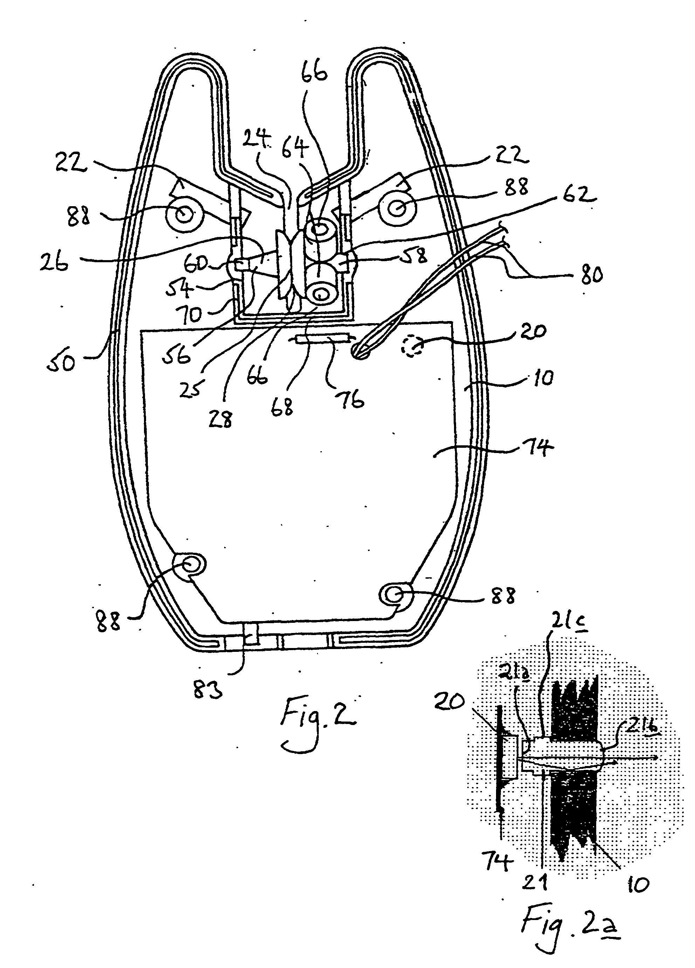

The upper end of the housing 10 is bifurcated, so that it has two generally upwardly extending prongs 18. As is illustrated in Figures 2 and 2a, the indicator is provided with a high brightness surface mounted light emitting diode LED 20 away from which extends a light guide 21 comprising solid water-clear acrylic.

Inwardly recessed ribs 22 are provided at the base of each prong 18 to reinforce the housing in those regions.

A slot 24 extends downwardly from the base of the bifurcation to expose a central portion 25 of a rotary part 26 contained within the housing. This central part is formed with a waist 28, so that it has the form of a pulley-wheel. A generally circular part 30 of the housing 10 is provided underneath the bifurcation, slightly offset from the longitudinal bisecting plane thereof, and is provided with a plurality of apertures 32 to permit sound to travel more readily through the housing 10 from a generally circular electromagnetic buzzer diaphragm 34 positioned immediately inwardly of the diaphragm cover 30. Immediately above and slightly to the left of the diaphragm cover 30 there is an on-off/test switch 36 extending outwardly from the housing 10.

Three rotary knobs 38, 40 and 42 are provided as a linear array immediately to the right of the diaphragm cover 30, these knobs being, respectively, a volume control, pitch control and sensitivity control for the buzzer.

As shown in Figure 1a, the housing wall at each knob 38, 40 and 42 is provided with an aperture 44 through which extends a shaft 46 which is rigidly secured to the knob. The wall of the housing 10 is raised at the annulus immediately surrounding the aperture 44. The underside of the knob is provided with a skirt portion 48 which surrounds the raised annulus to form a seal between the knob and the surrounding wall.

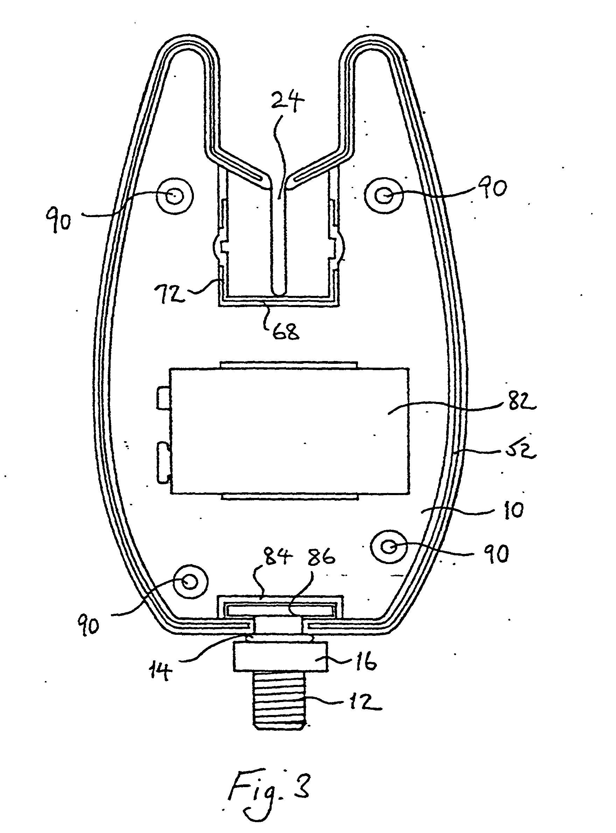

Figure 2 shows the interior of that half of the two-part housing 10 which is visible in Figure 1, with the other half of the housing 10 removed to reveal interior components of the fish-bite indicator. That edge of the housing half which faces the other half of the housing is formed with a longitudinally extending central rib 50. This engages a correspondingly formed longitudinally extending groove 52 formed on the corresponding edge of the other housing part shown in Figure 3.

Referring back to Figure 2, an inner wall 54 is formed in the housing and generally surrounds the slot 24 to form half of an enclosure which contains the rotary part 26.

Figure 2 shows that the rotary part has a tapering spindle portion 56 extending in an intended horizontal direction away from the central portion 25. A second spindle portion 58 of the rotary part 26 extends outwardly away from the central portion 25 in the opposite direction to that of the spindle portion 56. Respective recesses are formed in respective vertical parts of the inner wall 54 to provide rotary bearing means 60 and 62 respectively for the two spindle portions 56 and 58 of the rotary part 26.

Four cylindrical blocks 64 (only two of which are visible in Figure 2) extend radially outwardly from the rotary axis of the rotary part 26, spaced apart at 90° intervals therearound, and house respective permanent magnets 66. The length of each cylinder 64 and permanent magnet 66 is such that, when the rotary part is rotated, the distal end of each magnet passes adjacent to a bottom 68 of the inner wall 54.

The edges of the inner wall 54 which face the other half of the housing 10 shown in Figure 3, are provided with formations 70 which interengage with corresponding formations 72 formed on corresponding inner edges of the other half of the rotary part enclosure shown in Figure 3, to form a seal therewith.

The slot 24 in each half of the housing 10 extends to the upper face of the bottom 68 of the enclosure so that any water which finds its way into the enclosure can readily drain outwardly therefrom.

From the foregoing description, it will be appreciated that the housing, together with the inner wall 54, defines a sealed interior. The latter contains a printed circuit board 74 which is fixed to the interior of the housing 10 and which includes a reed switch 76 mounted on the circuit board 74 immediately adjacent to the bottom 68 of the inner wall 54, within range of the magnetic fields of the permanent magnets 66 as the latter pass by the bottom 68 when the rotary part 26 rotates.

As is more evident from Figure 2a, the LED 20 is a surface mounted LED mounted on the printed circuit board 74. The light guide 21 has a generally planar inner face 21a within the interior of the housing 10 and adjacent to the surface mounted diode 20. The guide 21 is generally cylindrical. It extends through the housing 10 and has a convex outer end 21b on the outside of the housing 10. An annular flange 21c of the guide 21 abuts the inner surface of the housing 10 and facilitates fixing of the guide 21 to the housing 10 by adhesive, by ultrasonic welding, or by means of a press fit.

Power leads 80 extend from the printed circuit board 74 to a 9 volt alkaline battery 82 shown in Figure 3.

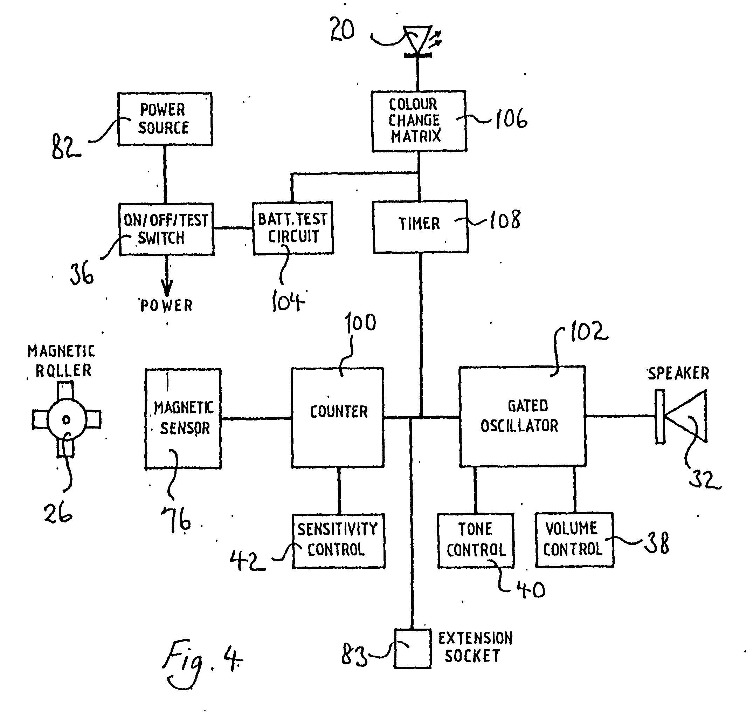

The on-off/test switch 36, the buzzer having the buzzer diaphragm 34, and each of the three control knobs 38, 40 and 42 shown in Figure 1 are all connected to the circuit board 74 to define circuitry shown in greater detail, and described hereinafter, with reference to Figure 4.

An extension socket 83 extends through the bottom of the housing 10 and is also connected to the printed circuit board 74.

Figure 3 shows a bridging wall portion 84 of the housing which extends around an upper flange 86 of the shank 12. The flange 86 and the nut 16 therefore clamp tightly on to the bottom of the wall of the housing 10 to fix the shank 12 rigidly to the housing 10.

Internally screw-threaded horizontally extending portions 88 are formed in the interior of the housing part shown in Figure 2, and apertures 90 formed in the housing part shown in Figure 3 in registration with the portions 88 when the two housing parts are brought together, enable screws (not shown) to secure those two housing parts tightly together with the rib 50 engaging the groove 52.

The manner in which the various parts of the indicator are connected together via the circuit board 74 is shown in Figure 4. Thus, the reed switch 76 is connected to the buzzer having a diaphragm 32 via a digital counter 100 and a gated oscillator 102 connected in series in that order passing from the switch 76 to the buzzer. The output of the oscillator 102 is thus buffered.

The volume control 38 and the pitch control 40 are connected directly to the gated oscillator to vary the volume and pitch respectively of the sound emitted by the buzzer having the diaphragm 32.

The sensitivity control 42 is connected to the counter 100. Adjustment of the sensitivity control 42 as a result alters the number of pulses the counter receives from the reed switch 76 before it issues a square-wave pulse to the gated oscillator 102.

As also shown in Figure 4, the battery 82 is connected to power the various parts of the circuitry via the on-off/test switch 36. A further output from that switch is connected to a battery test circuit 104 having an output connected to the LED 20. When the switch 36 is pushed to a test position (away from which it is resiliently urged by means (not shown) to its off position), the battery test circuit 104 measures the voltage from the battery 82 and causes the LED 20 to flash for about one second if the power provided by the battery 82 is acceptable, or to remain in the on condition for the duration of the test period (being the period during which the switch 36 is held in the test position) if the battery is providing inadequate power. Naturally, if the battery is providing no power at all the LED will not be illuminated. A fixed delay off type a timer 108 connected between the output of the counter 100 and the LED 20 latches to the on condition, to switch the LED on, for a predetermined duration of for example ten seconds upon receipt of a pulse from the counter 100.

Preferably, the circuitry comprises microprocessors and other integrated semi-conductor microchips duly programmed to operate in accordance with the manner of operation described herein.

When the fish-bite indicator is installed for use, the shank 12 is screwed into an internally screw-threaded portion at the top of a bank stick (not shown) so that the prongs 18 project upwardly. A portion of a fishing rod is then seated in the bifurcation, and the line of the fishing rod passes through the slot 24 so that it rests with tension on the rotary part 26.

The indicator may now be switched on at the switch 36. Subsequent movement of the line resulting from a fish-bite will then rotate the rotary part 26 so that the reed switch 76 is switched on every time one of the four magnets 66 passes close to it. The resulting electrical pulses generated by the reed switch are passed to the counter 100, which in turn passes a square-wave pulse to the LED 20 and also to the gated oscillator 102 with a frequency that is dependent upon the setting of the sensitivity control. In a first, most sensitive setting of the sensitivity control, an output pulse will be generated by the counter 100 to pass to the gated oscillator 102 every time the counter 100 receives a signal from the reed switch 76. In a second rotary setting of the sensitivity control knob 42, the counter 100 will only issue a pulse to the gated oscillator 102 every time it completes a count of two signals from the reed switch 76. In a further rotary setting, the count needed for the counter 100 to issue a signal is four, in a further setting it is eight, and so on. As a result, therefore, the distance of movement of the line along its length, to cause the counter 100 to issue a square-wave pulse, will vary according to the setting of the sensitivity control knob 42.

The gated oscillator 102 forwards an oscillatory signal to the buzzer having the diaphragm 32 every time it receives an output from the counter 100, for the duration of the output pulse from the counter 100. The frequency of the oscillation is determined by the setting of the pitch control knob 40, and the amplitude of the oscillations is determined by the setting of the volume control knob 38. Thus the pitch and volume of the audible signal which eminates from the buzzer can be varied by the pitch control knob 40 and the volume control knob 38 respectively, whilst the frequency with which successive buzzes occur, for a given angular velocity of the rotary part, can be varied by the sensitivity control knob 42. Expressing the sensitivity in another way, adjustment of the control knob 42 varies the amount of longitudinal movement of the fishing line, when the indicator is in use, that has to occur before the LED 20 flashes or the buzzer buzzes. For example, the minimum detectable movement might be as little as 45 mm (3/16 inch), or as much as 762 mm (3 inches). In this way, the indicator indicates not only the amount of line movement, but also the rate of line movement.

When the outer end 21b of the light guide 21 is illuminated, it receives light which passes from the diode 20 directly through the acrylic without reflection, and also light which is reflected off the boundary of the guide 21 by total internal reflection, as indicated by the arrows in Figure 2a. Because the outer end 21b is convex, it disperses light in all directions away from the housing within a solid angle of substantially 2π steradians. If the outer end 21b stands further proud of the housing, the angle could be even greater.

It will be appreciated that the LED 20 may be a tricolour (red, yellow or green) LED, or the LED 20 may be replaced by three diodes of different respective colours, in which case each would be arranged adjacent to an inner end of a larger light guide 21 such that when each emits light it illuminates the outer end 21b of the guide 21. The actual colour can be altered by appropriate changes to the colour change matrix 106, in a fashion which is known per se, by appropriately positioning jumpers on terminals of the matrix 106.

The extension socket may be used to relay the signal from the counter 100 to a remote monitor (not shown) which may for example be inside an angler's bivouac. Such a monitor may be provided with an alarm which is triggered in the event that the monitor becomes disconnected from the indicator.

The magnets 66 and reed switch 76 could be replaced by a photo-emitter pair, the radiation path between which is alternately made and broken by a rotary part, or by a rotary wheel attached thereto. It is possible to provide only one of the items comprising the buzzer having the diaphragm 32, and the extension socket 83, with the other being omitted. A single microchip programmed to detect which devices are present, and to programme itself to operate accordingly automatically when switched on, may be provided as part of the circuitry of the fish-bite indicator, enabling the same circuitry to be used for a number of different constructions of fish-bite indicator and thus further reducing the cost of manufacture of each embodiment.

The different settings of the sensitivity switch described herein may be obtained with different "click" position of the knob 42, the "click" position being defined by interenganging formations (not shown) for example formed on the underside of the knob 42 and the upper side of raised position of the wall of the housing 10.

The illustrated indicator may be so constructed that its power consumption is very low.

## Claims

1. A fish-bite indicator provided with a light indicator assembly and comprising a water-tight housing (10), a printed circuit board (74) contained within the housing (10), and at least one light-emitter device (20) attached to the printed circuit board (74), in which the assembly further comprises a generally cylindrical light guide (21) having an inner end (21a) situated in the housing interior adjacent to the light-emitter device (20), and an outer end (21b) situated on the outside of the housing (10), so that the said outer end (21b) is illuminated when the light-emitter device (20) emits light **characterised in that** the light-emitter device is a surface mounted light emitting diode (20) and the light guide (21) has (a) a generally planar inner face (21a) within the interior of the housing (10) and adjacent to the surface mounted light emitting diode (20) and (b) an annular flange (21c) which abuts the inner surface of the housing (10) and by which the guide (21) is fixed to the housing (10) in a water-tight fashion, whilst at the same time light is received by the outer end (21b) of the light guide (21) which has been reflected off the boundary of the light guide (21) by total internal reflection.

2. An indicator according to claim 1, **characterised in that** the light guide (21) comprises an optic fibre or other light guide which guides the light to a position outside the housing (10) which is spaced apart from that position on the outside of the housing which is closest to the light emitter device (20).

3. An indicator according to claim 1 or claim 2, **characterised in that** the light guide (21) is branched or otherwise comprises two or more guide parts to guide light to two or more respective locations on the outside of the housing (10).

4. An indicator according to any preceding claim, **characterised in that** the light emitter device (20) is connected to fish-bite detector circuitry in such a fashion as to emit light when the circuitry detects a fish-bite.

5. An indicator according to any preceding claim, **characterised in that** the light guide (21) comprises acrylic.

6. An indicator according to any preceding claim, **characterised in that** the said outer end (21b) is generally convex as viewed from outside the housing (10).

7. An indicator according to any preceding claim, **characterised in that** the angle of transmitted light from the said outer end (21b) in an intended horizontal plane is substantially 2 radians or more.

8. An indicator according to claim 7, **characterised in that** the solid angle of transmitted light from the said outer end (21b) is substantially 2π steradians or more.

9. An indicator according to claim 8, **characterised in that** the diode (20) is a dual colour or tricolour or multi-colour diode.

10. An indicator according to any preceding claim, **characterised in that** there are a plurality of diodes adjacent to the said inner end, each of which thereby illuminates the said outer end (21b) when it emits light, whereby the said outer end (21b) may be illuminated by any selected one of a plurality of colours.

## Patentansprüche

1. Fischanbeißindikator, der mit einer Lichtanzeigebaueinheit versehen ist und ein wasserdichtes Gehäuse (10), eine gedruckte Leiterplatte (24), die in dem Gehäuse (10) enthalten ist, und wenigstens eine Lichtemissionsvorrichtung (20), die an der gedruckten Leiterplatte (74) befestigt ist, umfasst, wobei die Baueinheit ferner einen im Allgemeinen zylindrischen Lichtleiter (21) umfasst, der ein inneres Ende (21a), das sich im Gehäuseinnenraum in der Nähe der Lichtemissionsvorrichtung (20) befindet, und ein äußeres Ende (21b), das sich an der Außenseite des Gehäuses (10) befindet, besitzt, so dass das äußere Ende (21b) beleuchtet wird, wenn die Lichtemissionsvorrichtung (20) Licht aussendet, **dadurch gekennzeichnet, dass** die Lichtemissionsvorrichtung eine oberflächenmontierte lichtemittierende Diode (20) ist und der Lichtleiter (21) (a) im Innenraum des Gehäuses (10) und in der Nähe der oberflächenmontierten lichtemittierenden Diode (20) eine im Allgemeinen ebene innere Fläche (21a) und (b) einen ringförmigen Flansch (21c), der an der inneren Oberfläche des Gehäuses (10) anliegt und durch den der Leiter (21) am Gehäuse (10) wasserdicht befestigt ist, aufweist, wobei gleichzeitig durch das äußere Ende (21b) des Lichtleiters (21) Licht empfangen wird, das von der Grenze des Lichtleiters (21) durch innere Totalreflexion reflektiert worden ist.

2. Indikator nach Anspruch 1, **dadurch gekennzeichnet, dass** der Lichtleiter (21) eine Lichtleitfaser oder ein anderer Lichtleiter, der Licht an eine Position außerhalb des Gehäuses (10) leitet, die von jener Position an der Außenseite des Gehäuses, die sich am nächsten bei der Lichtemissionsvorrichtung (20) befindet, beabstandet ist, umfasst.

3. Indikator nach Anspruch 1 oder Anspruch 2, **dadurch gekennzeichnet, dass** der Lichtleiter (21) verzweigt ist oder in anderer Weise zwei oder mehr Leiterteile aufweist, um Licht an zwei oder mehr entsprechende Orte an der Außenseite des Gehäuses (10) zu leiten.

4. Indikator nach einem vorhergehenden Anspruch, **dadurch gekennzeichnet, dass** die Lichtemissionsvorrichtung (20) mit einer Fischanbeiß-Detektorschaltungsanordnung verbunden ist, derart, dass sie Licht aussendet, wenn die Schaltungsanordnung das Anbeißen eines Fisches erfasst.

5. Indikator nach einem vorhergehenden Anspruch, **dadurch gekennzeichnet, dass** der Lichtleiter (21) Acryl enthält.

6. Indikator nach einem vorhergehenden Anspruch, **dadurch gekennzeichnet, dass** das äußere Ende (21b) bei Betrachtung von außerhalb des Gehäuses (10) im Allgemeinen konvex ist.

7. Indikator nach einem vorhergehenden Anspruch, **dadurch gekennzeichnet, dass** der Winkel des vom äußeren Ende (21b) durchgelassenen Lichts in eine betrachtete horizontale Ebene im Wesentlichen 2 Radian oder mehr beträgt.

8. Indikator nach Anspruch 7, **dadurch gekennzeichnet, dass** der Raumwinkel von von dem äußeren Ende (21b) durchgelassenem Licht im Wesentlichen 2π Steradian oder mehr beträgt.

9. Indikator nach Anspruch 8, **dadurch gekennzeichnet, dass** die Diode (20) eine zweifarbige, dreifarbige oder mehrfarbige Diode ist.

10. Indikator nach einem vorhergehenden Anspruch, **dadurch gekennzeichnet, dass** in der Nähe des inneren Endes mehrere Dioden vorhanden sind, wovon jede das äußere Ende (21b) beleuchtet, wenn sie Licht aussendet, wodurch das äußere Ende (21b) mit irgendeiner ausgewählten Farbe von mehreren Farben beleuchtet werden kann.

## Revendications

1. Un indicateur de touche de poisson, muni d'un ensemble indicateur lumineux et comprenant un boîtier (10) étanche à l'eau, une carte de circuit imprimé (74) logée à l'intérieur du boîtier (10), et au moins un dispositif photoémetteur (20) fixé à la carte de circuit imprimé (74), dans lequel l'ensemble comprend en outre un guide de lumière (21) globalement cylindrique, ayant une extrémité intérieure (21a) située à l'intérieur du boîtier, de façon adjacente au dispositif photoémetteur (20), et une extrémité extérieure (21b) située à l'extérieur du boîtier (10), de manière que ladite extrémité extérieure (21b) soit illuminée lorsque le dispositif photoémetteur (20) émet de la lumière, **caractérisé en ce que** le dispositif photoémetteur est une diode photoémettrice (20) à montage en surface et le guide de lumière (21) comprend (a) une face intérieure (21a) globalement plane, située à l'intérieur du boîtier (10) et adjacente à la diode photoémettrice (20) à montage en surface, et (b) une bride (21c) annulaire, venant en butée sur la surface intérieure du boîtier (10) et par laquelle le guide (21) est fixé sur le boîtier (10) de manière étanche à l'eau, tandis que, en même temps, est reçue, par l'extrémité extérieure (21b) du guide de lumière (21), de la lumière ayant été réfléchie à la frontière du guide de lumière (21), par une réflexion interne totale.

2. Un indicateur selon la revendication 1, **caractérisé en ce que** le guide de lumière (21) comprend une fibre optique ou un autre guide de lumière, guidant la lumière en une position extérieure au boîtier (10), espacée de la position située à l'extérieur du boîtier et qui est la plus proche du dispositif photoémetteur (20).

3. Un indicateur selon la revendication 1 ou la revendication 2, **caractérisé en ce que** le guide de lumière (21) est branché, ou autrement comprend deux parties de guidage ou plus, servant à guider la lumière vers deux emplacements respectifs ou plus, à l'extérieur du boîtier (10).

4. Un indicateur selon l'une quelconque des revendications précédentes, **caractérisé en ce que** le dispositif photoémetteur (20) est relié à un circuit détecteur de touche de poisson, de manière à émettre de la lumière lorsque le circuit détecte une touche de poisson.

5. Un indicateur selon l'une quelconque des revendications précédentes, **caractérisé en ce que** le guide de lumière (21) est formé d'un matériau acrylique.

6. Un indicateur selon l'une quelconque des revendications précédentes, **caractérisé en ce que** ladite extrémité extérieure (21b) est globalement convexe, si on l'observe depuis l'extérieur du boîtier (10).

7. Un indicateur selon l'une quelconque des revendications précédentes, **caractérisé en ce que** l'angle de lumière transmise depuis ladite extrémité extérieure (21b), dans un plan horizontal voulu est sensiblement de 2 radians ou plus.

8. Un indicateur selon la revendication 7, **caractérisé en ce que** l'angle solide de la lumière transmise depuis ladite extrémité extérieure (21b) est sensiblement de 2π stéradians ou plus.

9. Un indicateur selon la revendication 8, **caractérisé en ce que** la diode (20) est une diode à couleur duale, ou tricolore ou multicolore.

10. Un indicateur selon l'une quelconque des revendications précédentes, **caractérisé en ce que** sont prévues une pluralité de diodes adjacentes à ladite extrémité intérieure, dont chacune illumine de cette manière ladite extrémité extérieure (21b) lorsqu'elle émet de la lumière, de manière que ladite extrémité extérieure (21b) puisse être illuminée par une couleur quelconque, sélectionnée parmi la pluralité de couleurs.
